Europäisches Patentamt

European Patent Office

Office européen des brevets

(19)

(11) Publication number: **0 018 740**
**B1**

## EUROPEAN PATENT SPECIFICATION

(45) Date of publication of patent specification: **22.12.82**

(51) Int. Cl.³: **B 21 L 21/00** //B62D55/20

(21) Application number: **80301187.3**

(22) Date of filing: **15.04.80**

(54) Fixture and method for repairing track links.

(30) Priority: **30.04.79 PC T/US79/00283**

(43) Date of publication of application:
**12.11.80 Bulletin 80/23**

(45) Publication of the grant of the patent:
**22.12.82 Bulletin 82/51**

(84) Designated Contracting States:
**FR GB IT**

(56) References cited:
**DE - C - 1 131 823**
**US - A - 3 019 328**

(73) Proprietor: **CATERPILLAR TRACTOR CO.**
**100 Northeast Adams Street**
**Peoria Illinois 61629 (US)**

(72) Inventor: **Martin, Dean W.**
**6709 North Weeshire Court**
**Peoria Illinois 61614 (US)**

(74) Representative: **Jackson, Peter Arthur et al,**
**GILL JENNINGS & EVERY 53 to 64, Chancery Lane**
**London WC2A 1HN (GB)**

Courier Press, Leamington Spa, England.

Fixture and method for repairing track links.

This invention relates to a fixture and method for repairing link assemblies of the kind which are used on track-laying vehicles.

Track assemblies employed on track-laying vehicles, such as tractors, require periodic disassembly for repair purposes. Such repair includes turning or replacement of worn bushings, the repair or replacement of seals employed in the articulated joints of the track assemblies, and a rebuilding or replacement of worn track link rails.

It is common practice in carrying forth the latter rebuilding process to remove a link assembly from the track shoes of a track assembly and position it in a link welder where flux is applied and welding heads build-up the rail surfaces of the track links with a hard metal alloy. This procedure requires a substantial amount of space due to the overall length of the required machinery, requires a substantial number of shut-off patterns for the link welder, and further requires the handling of a substantial quantity of flux (DE—C—1,131,823).

In addition, the articulated joints of many track assemblies employ pin and bushing assemblies of the sealed and lubricated type therein which include rubber or plastic seals. In processes wherein the pin and bushing assemblies are left intact during welding, the seals employed in such assemblies require protection against the heat generated during the welding process. This protection is normally accomplished by either providing suitable heat dams or water beds to prevent damage to the seals.

In processes wherein the pin and bushing assemblies and seals therefor are removed prior to the welding process, a positioning fixture is normally provided for the individual track links to hold them in position while rebuilding their rail surfaces on a submerged arc link welder, for example. The latter type of fixture requires a considerably amount of manual handling of the track links and thus renders the welding procedure laborious and somewhat uneconomical. Furthermore, these type of fixtures do not lend themselves to the efficient storage of the track links of a particular link assembly.

In accordance with the primary aspect of the invention, a fixture for use in repairing track links comprises supporting means for supporting a plurality of links thereon; locating means for locating the links on the support means; and clamping means for overlying parts of the links and releasably clamping the links on the support means characterised in that the locating means are on the upper surface of the support means and are arranged to locate separated links side by side in a plurality of rows; and in that the clamping means are arranged to clamp each link to the support means, whereby the loaded fixture is transportable in use.

The invention also includes a method of repairing the links of a track link assembly, the method comprising the steps of separating the link assembly into individual links; locating and clamping the links in end to end longitudinally aligned rows and side by side transverse rows on support means of a fixture according to the primary aspect of the invention; and treating the links while on the fixture.

The new fixture and method provide for the economical and expeditious repair of the links. In particular, a particular link assembly is adapted to be broken-down into its individual links for compact and spaced securance thereof on the fixture whereby space requirements for the welding operation are greatly reduced, manual handling of the individual track links is reduced to a minimum, efficient transport of the loaded fixture can be readily accomplished by an overhead crane or lift truck, and the quantity of flux and shut-off patterns for the link welder are greatly reduced in comparison with conventional welding methods.

An example of a fixture constructed in accordance with the invention, and a comparative prior art fixture, are illustrated in the accompanying drawings, wherein:

Figure 1 is a partially sectional, broken plan of a fixture according to the invention showing a plurality of track links secured thereon;

Figure 2 is a partially sectional broken side elevation of the fixture with the track links secured thereon, as seen on the line II—II in Figure 1;

Figure 3 is a broken end elevation of the fixture with the track links secured thereon, as seen on the line III—III in Figure 2;

Figure 4 is a side elevation of a prior art fixture; and,

Figure 5 is a partial plan of the apparatus, as seen on the line V—V in Figure 4.

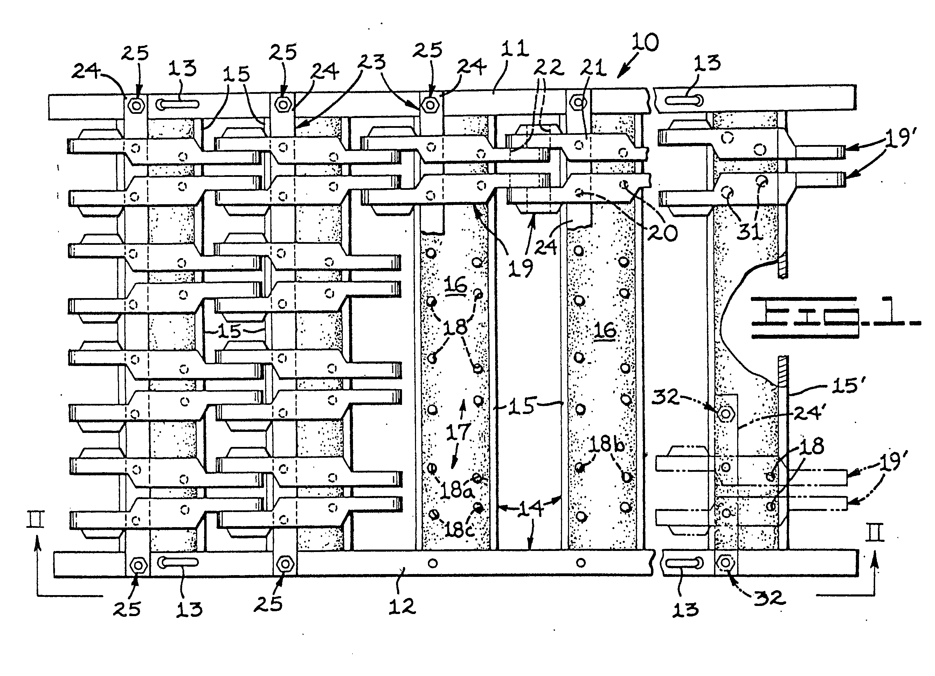

Figure 1 illustrates a frame-like fixture 10 comprising a pair of laterally spaced and parallel longitudinal members 11 and 12, shown in the form of standard channels. Lifting means comprising a plurality of eye bolts 13 are secured on the upper side of members 11 and 12 to provide lifting means for attachment to chains (not shown) to facilitate handling of fixture 10 by an overhead crane, a lift truck, or the like. In the embodiment illustrated, a pair of eye bolts 13 are secured in longitudinally spaced relationship to each member 11 and 12.

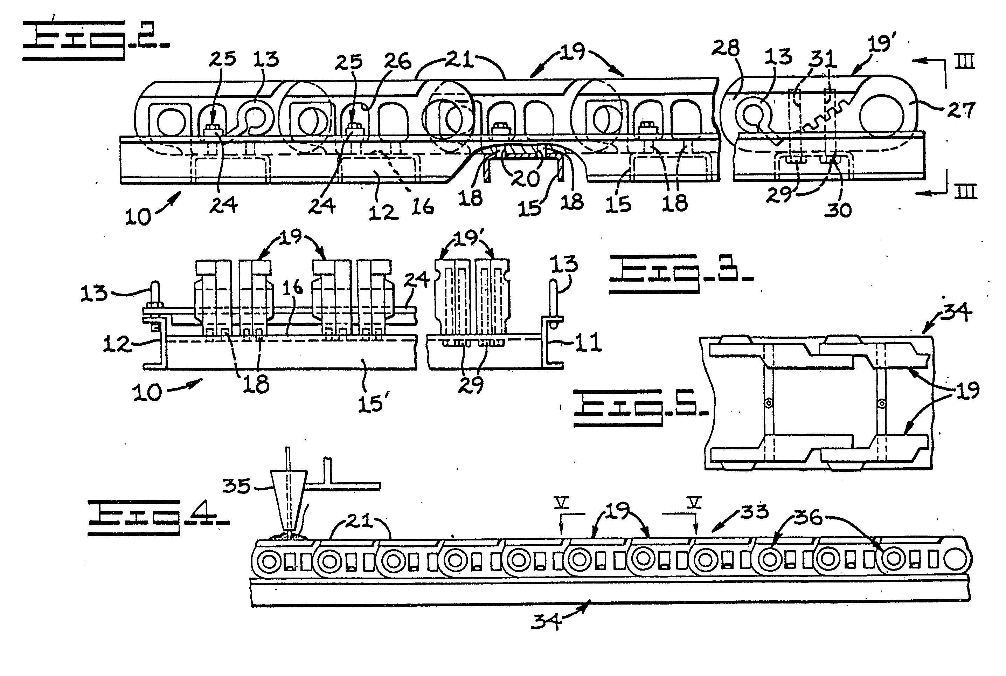

Support means 14, shown as comprising a plurality of longitudinally spaced and laterally extending cross-members 15 also in channel form, are welded or otherwise suitably secured in perpendicular relationship between rails 11 and 12. As more clearly shown in FIGS. 2 and 3, upper surfaces 16 of cross-members 15 are disposed vertically below upper sides of longitudinal members 11 and 12 for purposes hereinafter explained. Each surface 16 may be coated with a thin positive electrical grounding plate of copper or aluminum to prevent inadvertent flash welding of the links thereat and to improve the electrical grounding of the welding current.

Locating means 17, shown in the form of a plurality of upstanding pins or pin means 18, are secured on upper surface 16 of each cross-member 15 and function to precisely position all of the links 19 of a single link assembly on support means 14. Each standard link has a pair of longitudinally spaced and slightly offset holes 20 formed therein to secure a track shoe (not shown) thereto in a conventional manner. Each pin 18 projects upwardly into a respective hole 20, as more clearly shown in FIGS. 2 and 3. As shown in FIG. 1 a first pair 18a of pin means 18 are disposed in at least approximate longitudinal alignment with respect to a second pair 18b of longitudinally spaced pin means and also in at least approximate transverse alignment with a third pair 18c of the pin means.

It should be further noted that each link 19 has an upper rail surface 21 defined thereon which is rebuilt after wear occurs by a conventional welding method to provide a hardened wear surface for engagement with track rollers (not shown) for example, of a standard track-laying vehicle. Furthermore, a pair of bushing bores 22 are formed laterally through each link 19 to each receive a standard pin and bushing assembly therein upon assembly. As shown in FIG. 1, the overlapping ends of each pair of longitudinally adjacent links 19 are disposed to at least approximately align bores 22 thereof to facilitate their cleaning. The resulting longitudinally aligned and side-to-side relationship of the links provides for a compact arrangement to facilitate processing thereof in a manner hereinafter described.

A plurality of clamping means 23 are provided on fixture 10 for releasably clamping links 19 on support means 14 of fixture 10. In the embodiment illustrated, each clamping means 23 may comprise a transversely disposed clamping bar 24 releasably secured at opposite ends thereof on members 11 and 12 by bolts 25. As more clearly shown in FIGS. 2 and 3, each clamping bar 24 extends through aligned windows 26, formed through a plurality of laterally spaced links 19, to clamp the links on support means 14. As mentioned above, cross-members 15 of support means 14 are disposed vertically below the upper side of longitudinal members 11 and 12 to facilitate the clamping function of bars 24.

As shown in FIGS. 1—3, a pair of standard master links 19', each including a pair of separable parts 27 and 28, may be suitably secured on a slightly modified cross-member 15'. In particular, a pair of bolts 29 may be inserted upwardly through holes 30, formed through cross-member 15', and threadably secured within threaded bores 31, formed in each master link 19'. Alternatively, upstanding pins (not shown) could be secured to cross-member 15' to receive bores 31 thereon.

As shown in FIG. 1, an optional, shortened clamping bar 24' may be employed with fixture 10 to secure a pair of track links 19 to cross-member 15' to accommodate a particular link assembly having an odd number of links. It should be understood that if so desired, clamping bar 24' could be lengthened and additional locating pins 18 secured on cross-member 15' to accommodate one or two more pairs of links thereon.

Fixture 10 is particularly adapted for the mounting of the track links of a full link assembly thereon for repair and/or storage purposes.

In order to remove a track assembly from a tracked vehicle, parts 27 and 28 of master links 19' would be disconnected by bolts 29. The track assembly would then be shipped to a repair facility whereafter the track shoes would be removed from the link assembly. The pin and bushing assemblies pivotally interconnecting longitudinally adjacent pairs of links 19 together would be then removed by a standard track press. Many such pin and bushing assemblies are of the sealed and lubricated type, employing elastomeric seals therein which would be prone to damage should they be left intact during the subsequent welding process.

The individual track links 19 and 19' with their seals (not shown) removed are then mounted in longitudinally aligned and side-to-side relationship with respect to each other on fixture 10, as shown in FIG. 1. Links 19 are located on support means 14 by pins 18 which project into the standard bolt-receiving holes 20 of the links. Thus, pins 18 of locating means 17 precisely position and space links 19 on fixture 10 and prevent lateral movement of the links thereon. When the link assembly employs master track links 19' therein, the master track links are secured to cross-member 15' by bolts 29 in the manner described above.

A clamping bar 24 is then inserted transversely through aligned windows 26 of each group of laterally spaced links 19 and is clamped to members 11 and 12 by bolts 25. When the link assembly employs an odd number of pairs of links, shortened clamping bar 24' may be utilized to secure the odd pair of links to cross-member 15' by bolts 32.

Lifting chains may then be attached to eye bolts 13 to transport fixture 10, having links 19 of a full link assembly mounted thereon, to a wash bay by an overhead crane or lift truck. The fixture is then passed through the wash bay to wash and clean the links, including rail surfaces 21 and bores 22 thereof. Fixture 10 is then transported to the link welder, packed in flux, and welded in a conventional manner to apply a layer of wear-resistant and hardened metallic material to rail surfaces 21.

Fixture 10 having repaired links 19 mounted thereon, may then be either stored for future use or transported to an assembly station to again reassemble the link assembly. Removal of links 19 from fixture 10 for assembly purposes would involve a reversal of the above steps for mounting the links on the fixture. In particular, removal of clamping bars 24 and 24' (when utilized), as well as bolts 29, will permit repaired links 19 and 19' to be removed from fixture 10. The links are thus ready for connection together by a standard track press which functions to secure a pin and bushing assembly within transversely aligned bores 22 of each adjacent pair of links 19.

FIGS. 4 and 5 illustrate a prior art apparatus 33 which includes a fixture 34 for clamping links 19 of a link assembly thereto. A welder 35 is then moved along fixture 34 in a continuous line to apply a metal build-up or weld to rail surfaces 21. It is obvious that apparatus 33 requires substantial floor space in a repair facility. Apparatus 33 also requires handling of a substantial amount of flux due to the low density packing of track links 19 and also substantial set-up time due to the need for a large number of shut-off patterns (e.g. forty) of welder 35.

Furthermore, the utilization of conventional apparatus 33 may require the use of a heat dam or water bed (not shown) therewith to prevent damage to seals employed in pin and bushing assemblies 36 when they are of the sealed and lubricated type. The liquid coolant employed in the water bed normally covers the sealed joint and any splashing thereof on rail surfaces 21 during the welding process could cause hydrogen embrittlement which could adversely affect the quality of the weld.

From the above description it can thus be seen that fixture 10 and the above-described method of this invention provide for the expeditious, economical, and compact mounting of links 19 of a full link assembly on the fixture thereon for repair and/or storage purposes. Fixture 10 can be readily transported in a repair facility and the welding station and attendant apparatus therefor require substantially less floor space than conventional apparatus 33, shown in FIG. 4. Fixture 10 also provides for the precise positioning and spacing of links 19 thereon to facilitate the cleaning and welding procedures, as discussed above.

## Claims

1. A fixture (10) for use in repairing track links (19), the fixture comprising support means (14) for supporting a plurality of links (19) thereon; locating means (17) for locating the links on the support means; and clamping means (23) for overlying parts of the links and releasably clamping the links on the support means characterised in that the locating means (17) are on the upper surface of the support means (14) and are arranged to locate separated links side by side in a plurality of rows; and in that the clamping means (23) are arranged to clamp each link (19) to the support means (14), whereby the loaded fixture is transportable in use.

2. A fixture according to claim 1, further including a pair of longitudinally extending and laterally spaced longitudinal members (11, 12); the support means (14) including a plurality of longitudinally spaced and laterally extending cross-members (15).

3. A fixture according to claim 2, wherein the upper surfaces of the cross-members (15) are disposed vertically below the upper surfaces of the longitudinal members (11, 12); and the clamping means (23) include bar means (24) which are arranged to extend through aligned windows (26) of a laterally aligned group of the links (19) and to be bolted down towards the longitudinal members.

4. A fixture according to any one of the preceding claims, wherein the locating means (17) includes a plurality of upstanding pins (18) for engaging respective holes (20) formed in the links (19).

5. A fixture according to claim 4, wherein pairs (18a) of the pins (18) are disposed in substantial alignment longitudinally of the fixture with some other pairs of the pins (18b), and in substantial alignment transversely of the fixture with further pairs of the pins (18c), whereby links may be carried by the support means in end to end longitudinal, and side by side transverse, rows.

6. A fixture according to any one of the preceding claims further including lifting means (13) for use in attaching devices such as chains for lifting and transporting the fixture (10) and any links supported thereby.

7. A fixture according to claim 6, wherein the lifting means includes a plurality of eyes (13).

8. A method of repairing the links (19) of a track link assembly, the method comprising the steps of separating the link assembly into individual links (19); locating and clamping the links in end to end longitudinally aligned rows and side by side transverse rows on support means of a fixture according to any one of the preceding claims, and treating the links while on the fixture.

9. A method according to claim 8, further including removing pin and bushing assemblies from the links prior to the locating and clamping step.

10. A method according to claim 8 or claim 9, wherein all of the links (19) of a single link assembly are clamped on a single fixture (10).

## Revendications

1. Appareil (10) destiné à être utilisé pour réparer les maillons (19) d'une chenille, comprenant des moyens de support (14) pour supporter un certain nombre de maillons (19); des moyens de centrage (17) pour positionner les maillons sur les moyens de support; et des moyens de serrage (23) venant se placer au-dessus de certaines parties des maillons et permettant de serrer ces dernières non définitive sur les moyens de support, caractérisé en ce que les moyens de centrage (17) sont situés sur la face supérieure des moyens de support (14) et sont arrangés pour placer les maillons séparés côte à côte en plusieurs rangées; et en ce que les moyens de serrage (23) sont arrangés pour serrer chaque maillon (19) sur les moyens de support (14), ce qui fait que l'appareil peut être transporté pendant qu'il est chargé.

2. Appareil selon la revendication 1 comprenant en outre deux longerons (11, 12) s'étendant longitudinalement et espacés latéralement, les moyens de support (14) comprenant un certain nombre de traverses (15) espacées longitudinalement et s'étendant latéralement.

3. Appareil selon la revendication 2 dans lequel les surfaces supérieures des traverses (15) sont disposées verticalement sous les surfaces supérieures des longerons (11, 12); et en ce que les moyens de serrage (23) comprennent des barres (24) qui traversent des fenêtres alignées (26) d'un groupe aligné latéralement de maillons (19) et qui sont appelées à être vissées sur les longerons.

4. Appareil selon l'une quelconque des revendications précédentes dans lequel les moyens de centrage (17) comprennent un certain nombre de goujons verticaux (18) destinés à venir dans des trous (20) formés dans les maillons (19).

5. Appareil selon la revendication 4, dans lequel des paires (18a) de goujons (18) sont alignées longitudinalement sur l'appareil avec d'autres paires de goujons (18b), et sont alignées transversalement sur l'appareil avec d'autres paires de goujons (18c), ce qui fait que les maillons peuvent être portés par les moyens de support de manière à former des rangées longitudinales bout à bout et des rangées transversales côte à côte.

6. Appareil selon l'une quelconque des revendications précédentes, comprenant en outre des moyens de levage (13) pour des dispositifs de fixation tels que des chaînes destinées à lever et à transporter l'appareil (10) et les maillons supportés par celui-ci.

7. Appareil selon la revendication 6 dans lequel les moyens de levage comprennent un certain nombre d'oeillets (13).

8. Procédé pour réparer les maillons (19) d'une chenille, qui consiste à séparer la chenille en maillons individuels (19); à placer et à serrer les maillons bout à bout en rangées alignées longitudinalement et en rangées juxtaposées transversales sur les moyens de support d'un appareil selon l'une quelconque des revendications précédentes, et à traiter les maillons pendant qu'ils sont sur l'appareil.

9. Procédé selon la revendication 8, consistant en outre à enlever les coussinets et les axes des maillons avant de placer et de serrer ces dernières.

10. Procédé selon la revendications 8 ou 9, dans lequel tous les maillons (19) d'une même chenille sont fixés sur un seul appareil (10).

**Patentansprüche**

1. Halterung (10) zur Verwendung bei der Reparatur von Kettengelenken (19) mit Tragmitteln (14) zum Tragen einer Vielzahl von Gelenken (19) darauf,

Anordnungsmitteln (17) zur Anordnung der Gelenke auf den Tragmitteln

und Festklemm-Mittel (23) zum Liegen über Teilen der Gelenke und zur lösbaren Festklemmung der Gelenke an den Tragmitteln, dadurch gekennzeichnet, daß sich die Anordnungsmittel (17) an der Oberseite der Tragmittel (14) befinden und derart angeordnet sind, daß sie gesonderte Gelenke Seite an Seite in einer Vielzahl von Reihen anordnen, und daß die Festklemm-Mittel (23) derart angeordnet sind, daß sie jedes Gelenk (19) an den Tragmitteln (14) festklemmen, wodurch die beladene Halterung im Gebrauch transportfähig ist.

2. Halterung nach Anspruch 1, ferner mit einem Paar von sich in Längsrichtung erstreckenden und mit seitlichem Abstand angeordneten Längsgliedern (11, 12), wobei die Tragmittel (14) eine Vielzahl von in Längsrichtung mit Abstand angeordneten und sich seitlich erstreckenden Kreuzgliedern (15) aufweisen.

3. Halterung nach Anspruch 2, wobei die Oberseiten der Kreuzglieder (15) vertikal unterhalb der Oberseiten der Längsglieder (11, 12) angeordnet sind, und wobei ferner die Festklemm-Mittel (23) Stangenmittel (24) aufweisen, die derart angeordnet sind, daß sie sich durch die ausgerichteten Fenster (26) einer seitlich ausgerichteten Gruppe von Gelenken (19) erstrecken und auf die Längsglieder hin durch Bolzen angezogen werden können.

4. Halterung nach einem oder mehreren der vorhergehenden Ansprüche, wobei die Anordnungsmittel (17) eine Vielzahl von aufrechtstehenden Stiften (18) für den Eingriff mit entsprechenden in den Gelenken (19) ausgebildeten Löchern (20) aufweisen.

5. Halterung nach Anspruch 4, wobei Paare (18a) der Stifte (18) längs der Halterung im wesentlichen in Ausrichtung mit einigen anderen Paaren von Stiften (18b) und quer zur Halterung im wesentlichen in Ausrichtung mit weiteren Paaren von Stiften (18c) angeordnet sind, wodurch die Gelenke von den Tragmitteln in Ende zu Ende Längs- und Seite an Seite Quer-Reihen getragen werden können.

6. Halterung nach irgendeinem der vorhergehenden Ansprüche mit Hubmitteln (13) zur Verwendung bei Befestigungsvorrichtungen wie beispielsweise Ketten zum Heben und Transportieren der Halterung (10) und jedweden da-

9 **0018740** 10

durch getragenen Gelenken.

7. Halterung nach Anspruch 6, wobei die Hubmittel eine Vielzahl von Augen (13) aufweisen.

8. Verfahren zur Reparatur von Gelenken (19) einer Kettengelenkanordnung, wobei folgende Schritte vorgesehen sind: Trennen der Gelenkanordnung in einzelne Gelenke (19), Anordnung und Festklemmen der Gelenke in End zu End längsausgerichteten Reihen und Seite an Seite querverlaufenden Reihen auf Tragmitteln einer Halterung gemäß irgendeinem der vorhergehenden Ansprüche, und Bearbeitung der Gelenke während diese sich auf der Halterung befinden.

9. Verfahren nach Anspruch 8, gekennzeichnet durch das Entfernen der Stift- und Buchsen-Anordnungen von den Gelenken vor dem Anordnungs- und Festklemmschritt.

10. Verfahren nach Anspruch 8 oder 9, wobei alle Gelenke (19) einer einzigen Gelenkanordnung auf einer einzigen Halterung (10) festgeklemmt sind.

FIG. 1

Fig. 2.  Fig. 3.  Fig. 4.  Fig. 5.